# EUROPEAN PATENT APPLICATION

(11) **EP 4 841 653 A2**
(43) Date of publication of application: **18.11.2026**
(21) Application number: 26174904.8
(22) Date of filing: 24.11.2021
(51) Int. Cl.: G21F 1/12

(54) **COMPOSITE MULTIFUNCTIONAL STRUCTURAL MATERIAL FOR HIGH ENERGETIC CHARGED PARTICLE RADIATION SHIELDING**

(30) Priority: 25.11.2020 US 202063118384 P
(62) Document number(s) of the earlier application(s) in accordance with Art. 76 EPC: 21830563.9 / 4 251 518
(71) Applicant: Cosmic Shielding Corporation, Atlanta, GA 30312 (US)
(72) Inventor: SIHVER, Lembit, 74948 Enköping (SE); BARGHOUTY, Fakhri Yanni, Atlanta, 30312 (US)
(74) Representative: Crowell & Moring U.K. LLP

(57) **Abstract**

A composite material comprising a first shielding layer; at least one metal containing layer over the first shielding layer; and a second shielding layer over said at least one metal containing layer opposite of the first shielding layer; wherein the first shielding layer and the second shielding layer each and/or in combination with other layers of the composite material provide the composite material with radiation shielding characteristics.

## Description

The present application relates to a composite multifunctional material for shielding for use above and beyond the Earth's atmosphere.

### Background

In recent years, the rapid progress made in space technology has led to extraordinary accomplishments, enabling space travel and future habitation of Moons and other planets. With these accomplishments, there is a need for continued development of material adaptable in the harsh space environment for protection, whether such material is a part of the hull of a spacecraft, situated around sensitive electronics, situated around special radiation shelters inside a spacecraft, around other equipment inside of a spacecraft, or used as the outer shielding arrangement.

The material must be qualified for space usage and undergo several tests, which will grade what "Technology Readiness Level" (From TRL 1 to TRL 9) the material has, according to Table 1 below.

**Table 1.**

| | |
|---|---|
| TRL 9 | Actual system "flight proven" through successful mission operations |
| TRL 8 | Actual system completed and "flight qualified" through test and demonstration (ground or space) |
| TRL 7 | System prototype demonstration in space environment |
| TRL 6 | System/subsystem model or prototype demonstration in a relevant environment (ground or space) |
| TRL 5 | Component and/or breadboard validation in relevant environment |
| TRL 4 | Component and/or breadboard validation in laboratory environment |
| TRL 3 | Analytical and experimental critical function and/or characteristic proof-of-concept |
| TRL 2 | Technology concept and/or application formulated |
| TRL 1 | Basic principles observed and reported |

To pass the tests, knowledge in material science, radiation physics, radiation protection, as well as an understanding of photon, electron and ion reactions and transport in a different material, are indispensable. Herein described composite material is purposed to pass these tests by providing the requisite protection for at least humans and electronics from harmful physical, thermal, chemical and radiation damages exhibited above and beyond the Earth's atmosphere, in space.

The embodiments described below are not limited to implementations which solve any or all of the disadvantages of the known approaches described above.

### Summary

This Summary is provided to introduce a selection of concepts in a simplified form that are further described below in the Detailed Description. This Summary is not intended to identify key features or essential features of the claimed subject matter, nor is it intended to be used to determine the scope of the claimed subject matter; variants and alternative features which facilitate the working of the invention and/or serve to achieve a substantially similar technical effect should be considered as falling into the scope of the invention disclosed herein.

This Summary is provided to introduce a selection of concepts in a simplified form that are further described below in the Detailed Description. This Summary is not intended to identify key features or essential features of the claimed subject matter, nor is it intended to be used to determine the scope of the claimed subject matter; variants and alternative features which facilitate the working of the invention and/or serve to achieve a substantially similar technical effect should be considered as falling into the scope of the invention disclosed herein.

The present disclosure provides a multifunctional-layered structure for shielding against various types of radiation. The multifunctional-layered structure is described as a composite material or composite multifunctional material. The layers of the composite material may be merged into each other, forming a single multifunctional structure. The composite material further provides structural support, ballistic protection (micrometeoroids, debris, etc.), heat/fire protection, and protection against atomic oxygen.

In a first aspect of present disclosure is a composite material comprising: a first shielding layer; at least one metal/metal oxide layer over the first shielding layer; and a second shielding layer over said at least one metal/metal oxide layer opposite of the first shielding layer; wherein the first shielding layer and the second shielding layer each and/or in combination with other layers of the composite material provide the composite material with radiation shielding characteristics.

In a second aspect of present disclosure a plurality of multifunctional layers with each layer stacked on top of one another or as gradients merging into each other layer forming the composite shielding material with optimized thermal properties; wherein the plurality of multifunctional layers comprise at least two shielding layers with each shielding layer disposed between at least two other multifunctional layers selected from a structural layer, metal/metal oxide layer, micrometeoroid layer, and thermal protection layer.

In a third aspect of present disclosure is a method for providing the composite material, comprising: generating a model of the composite material in a virtual environment, wherein the model comprises a digital representation of a composite material comprising: a first shielding layer, at least one metal/metal oxide layer over the first shielding layer, and a second shielding layer over said at least one metal/metal oxide layer; providing a composition of the composite material to a device; generating the composite material based on the model using the composition, wherein the composition is combined to form layers of the composite material; and removing imperfections or defects on the composite material in accordance with the model based on one or more inputs.

In a fourth aspect of present disclosure is composite material in accordance with previous figures, wherein the composite material comprises a first layer a second layer disposed on the first layer; and a third layer disposed on the second layer opposite the first layer, such that the second layer is disposed between the first layer and the third layer; wherein the first layer comprises a structural and radiation shielding layer; wherein the second layer comprises a radiation shielding layer; and wherein the third layer comprises a micrometeoroid and thermal protection layer.

The methods described herein for producing the composite material may be performed by software in machine-readable form on a tangible storage medium e.g. in the form of a computer program comprising computer program code means adapted to perform all the steps of any of the methods described herein when the program is run on a computer or apparatus for manufacturing the composite material and where the computer program may be embodied on a computer-readable medium. Examples of tangible (or non-transitory) storage media include disks, thumb drives, memory cards etc. and do not include propagated signals. The software can be suitable for execution on a parallel processor or a serial processor such that the method steps may be carried out in any suitable order, or simultaneously. micrometeoroid and thermal protection layer.

The optional features or options described herein may be combined as appropriate, as would be apparent to a skilled person, and may be combined with any of the aspects of the invention.

### Brief Description of the Drawings

Embodiments of the invention will be described, by way of example, with reference to the following drawings, in which:
Figure 1 is an example of the composition of the different layers of the composite material where the composite material is used as a construction material for a spacecraft habitat.
Figure 2 is another example of the composition of the different layers of the composite multifunctional materials for shielding means;
Figure 3 is another example of the composition of the different layers of the composite multifunctional materials for shielding means; and
Figure 4 is an example method of providing the composite materials for shielding means.

Common reference numerals are used throughout the figures to indicate similar features.

### Detailed Description

Embodiments of the present invention are described below by way of example only. These examples represent the suitable modes of putting the invention into practice that are currently known to the Applicant although they are not the only ways in which this could be achieved. The description sets forth the functions of the example and the sequence of steps for constructing and operating the example. However, the same or equivalent functions and sequences may be accomplished by different examples.

Described herein is a multifunctional-layered structure or composite material that provides shielding, namely against charged particles, such as protons, alpha particles and heavy ions; photons, such as X-rays and gamma rays; fast, slow, and thermal secondary neutrons, while also serving structural purposes, ballistic protection (micrometeoroids, debris, etc.), heat protection and protection against atomic oxygen when used at or above low Earth orbits (LEO). For example, the shielding may be adapted to minimize the effects of galactic cosmic radiation, particles trapped in radiation belts, as well as against solar energetic particles and electromagnetic radiation, including X-rays and gamma rays.

The composite material comprises one or more layers, where the layers may gradually merge into each other, forming a single structure. Herein layers refer to two or more layers of the composite material with radiation shielding characteristics. The layers may be multifunctional or serve a single purpose to protect objects in space or travelling in space from or by minimizing physical, thermal, chemical, and radiation damages. For example, the layers may be used to mitigate chemical damage from corrosive atomic oxygen.

Layers may also be in the form of gradients, coatings, or sublayers of a single or plurality of layers. The layers are gradually merged into each other, forming a single layered structure. The layers may be stacked or disposed on top of one another, forming the composite material. Each layer may comprise structural material with the same or different optimized mechanical and/or thermal properties. The layers comprise the shielding layer, metal containing layer, as well any other layer(s) described in the following sections.

The shielding layer refers to a part of the composite material, layer, gradient, or coating with radiation shielding characteristics or affords protection from radiation exposure to by the objects in space. The shielding layer comprises thermoplastic polymers such as ultra-high molecular weight polyethylene (UHMWPE), high-density polyethylene (HDPE) or medium-density polyethylene (MDPE) doped with one or more types of chemical compounds. The chemical compounds may be Boron(B)-based or Lithium(L)-based. The chemical compounds may include but are not limited to B, BN, BC₄, B₂O₃, LiH, 6LiH LiBH₄, Li₁₀BH₄, Li₂B₁₂H₁₂, Li₄BH₄(NH₂)₃, NH3BH3, NH₃, Mg(BH₄)₂. Lithium may be Li with natural abundance or enriched ⁶Li, and boron may be B with natural abundance or enriched ¹⁰B. For the purpose of providing radiation protection, it is understood that various alternative B-based or Li-based compositions and derivatives thereof may be integrated or able to be integrated with the thermoplastic polymers as part of the shielding layer. The thermoplastic polymers, i.e. UHMWPE, HDPE or MDPE, are produced to certify mechanical strength, and thermoplastic polymers' high hydrogen content certifies good radiation shielding characteristics or properties with respect to high or highly energetic charged particles present in space. The thermoplastic polymers also slow down secondary produced neutrons. The boron and/or lithium, specifically by 1 to 20%, doping is to absorb slow and thermal neutrons, further improving the quality of the shielding.

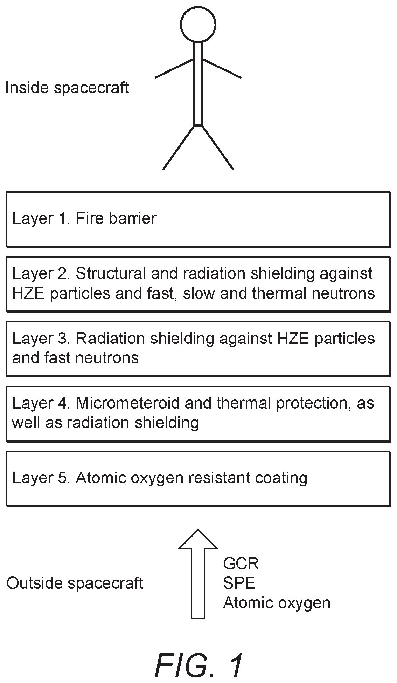

One example of a shielding layer, in relation to figures 1 to 3, may be a mechanical strong radiation shielding, which also acts to protect from Micrometeoroids and Orbital Debris (MMOD). The layer comprises UHMWPE or HDPE doped with 1 to 20% (i.e. 5%) boron and/or lithium compounds. The boron and or lithium compounds can be B, BN, BC₄, B₂O₃, LiH, 6LiH LiBH₄, Li₁₀BH₄, Li₂B₁₂H₁₂, Li₄BH₄(NH₂)₃, NH3BH3, NH₃, Mg(BH₄)₂. For the boron and lithium compounds, Lithium can be either Li with natural abundance or enriched ⁶Li, and boron can either be B with natural abundance or enriched ¹⁰B. Compounds include but are not limited to aluminium, aluminium hydroxide, phosphorus, nitrogen, antimony, chlorine, bromine, magnesium, magnesium hydroxide, antimony, tin zinc, and carbon may be included as fire/flame retardant.

In relation to the figures, another example of a shielding layer may be a mechanical strong radiation shielding. The shielding layer comprises UHMWPE or HDPE doped with 1-20% (i.e. 15%), boron and/or lithium compounds. The boron and or lithium compounds can be: B, BN, BC₄, B₂O₃, LiH, 6LiH LiBH₄, Li₁₀BH₄, Li₂B₁₂H₁₂, Li₄BH₄(NH₂)₃, NH3BH3, NH₃, Mg(BH₄)₂. For the boron and lithium compounds, Lithium can be either Li with natural abundance or enriched ⁶Li, and boron can either be B with natural abundance or enriched ¹⁰B. Aluminium, aluminium hydroxide, phosphorus, nitrogen, antimony, chlorine, bromine, magnesium, magnesium hydroxide, antimony, tin zinc and carbon as fire-retardant compounds may also be added.

Further, in relation to the figures, structural layers comprise layers for protection against atomic oxygen present at LEO, where the strong UV radiation breaks down the O₂ to atomic oxygen. The layer may be made of SiO₂ without and filled with 8 to15% (by volume) fluoropolymer, thin gold or platinum layer or silicon-based paint. The structural layer may further comprise a strong micro-meteoroid (MMOD), debris and heat protection layer. For space vehicle and/or space habitat applications, the ceramic material is made of aluminium oxide Al₂O₃, boron carbide (B₄C), or silicon carbide (SiC), aluminium carbide (Al₄C₃).

The metal containing layer refers to a part of the composite material, layer, gradient, or coating. The metal containing layer may be, for example, a metal layer, metal oxide layer, metal/metal oxide powder dispersed in a polymer matrix, metal/metal oxide enriched layer, or a coating of the composite metal/metal oxide. The metal containing layer may comprise, for example, metal(s) / metal oxide(s) and derivatives thereof.

The metal containing layer is adapted to minimize the effects of electrons, X-ray(s) or radiation from the X-ray. The composite material, layer, gradient, or coating may comprise one or more metal containing layers. The metal containing layer or layers are situated between or adjacent to the shielding layer of the composite material. The metal containing layer may have any thickness between 1mm and 30mm, inclusive of 1mm and 30mm, and are stacked on top of one another to form multiple metal containing layers as part of the composite material, gradients, coating, or powdered form of metal/metal oxide(s) in the thermoplastic.

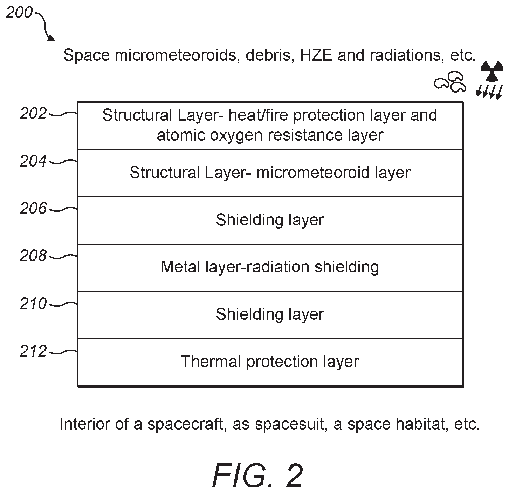

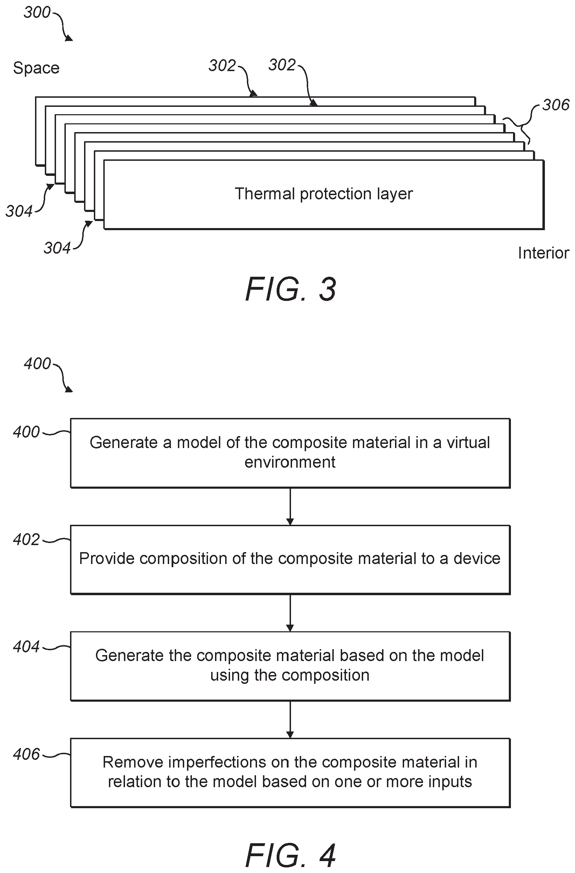

The metal containing layers are shown in figures 2 and 3. In relation to the figures, one example of a metal containing layer that may comprise a metal/metal oxide or a metal/metal oxide, metal/metal oxide powder dispersed in the polymer matrix, with an atomic number (Z) equal to 13, or any value from 22 to 30, is to minimize the X-ray production while attenuating the initial electrons.

Another example of a metal containing layer, a metal/metal oxide layer, or oxide powder dispersed in the polymer matrix, may comprise a metal/metal oxide with an atomic number (Z) equal to any value from 72 to 79 is to maximize the attenuation of the X-rays, which was created.

Another example of a metal containing layer, a metal/metal oxide, or oxide powder dispersed in the polymer matrix, may comprise a metal/metal oxide with an atomic number (Z) ranging from 13, or any value from 22 to 30, is to stop the secondary electrons without creating significant more X-rays.

More than one metal containing layer may be used to generate the composite material. An example of multiple metal containing layers may be a first layer consisting of a metal/metal oxide with an atomic number (Z) equal to 13 or any value from 22 to 30. The first layer is disposed on a second layer consisting of a metal/metal oxide with an atomic number (Z) equal to any value from 72 to 79. The second layer is disposed on a third layer consisting of a metal/metal oxide with an atomic number (Z) ranging from 13 or any value from 22 to 30. The first, second, and third layers each may have a thickness of at least 1 mm, preferably from 1mm to 30 mm. The layers may be part of the thermoplastic material in the form of a gradient.

It is understood that metal containing layers (or specifically, metal/metal oxide layers) or any of the herein described layer(s) may be embedded or part of the thermoplastic polymers of the composite material as gradients to induce the effect of radiation shielding, as described above. This effect is inherent in the nature of metal/metal oxides with low atomic weight, ranging from 13 or any value between 22 and 30, inclusive of 22 and 30. The metal containing layer(s) serve as shielding for electrons and the heavier metal with an atomic number between 72 and 79, inclusive of 72 and 79, for photons (emitted by X-rays and gamma rays).

It is further understood that the layers may be gradually merged into each other to form a single composite structure. The composite material also comprises one or more structural layers. A structural layer refers to a part of the composite material, layer, gradient, or coating that provides structural support against Micrometeoroids and Orbital Debris (MMOD) or are adapted to protect against physical, thermal, corrosion and radiation damages.

In relation to figures 1 to 3, one example of a structural layer may comprise an atomic oxygen resistance layer over at least one micrometeoroid layer. The structure layer is situated or disposed on the shielding layer. The structural layer may be used or an integral part of a space vehicle and/or in a space habitat together with the shielding layer. In general, the structural layer may include multiple layers of composite materials with multiple functions or multifunctional composite materials. Such material may comprise oxidation-resistant material, ballistic protection, heating resistant material, and polymer-based material. The multiple layers may comprise a micrometeoroid layer, a heat protection layer and an atomic oxygen resistance layer.

One example of multifunctional composite materials may comprise heating resistant material, which includes but are not limited to ceramic material that is made of aluminium oxide Al₂O₃, boron carbide (B₄C), silicon carbide (SiC), or aluminium carbide (Al₄C₃). The multifunctional composite materials protect against physical and thermal-based effects with their relative hardness and wear-resistant properties, along with their lightweight characteristics. The multifunctional composite materials may be a part of a micrometeoroid layer or coating.

Another example of multifunctional composite materials that may comprise oxidation-resistant materials, which include but are not limited to material made of SiO₂ without and filled with 5 to15% (by volume) fluoropolymer or polymer-based material, thin gold or platinum layer or silicon-based paint. The multifunctional composite materials may be a part of the atomic oxygen resistance layer or coating.

Thermal protection layer refers to heat and/or fire resistance layer, coating or barrier, where the layer exhibit substantial heat transfer and/or fire-resistant properties. The thermal protection layer may comprise at least one fire resistant sublayer or coating that protects against fire or effects of fire damages such as a fire barrier in addition to protection against thermal damage. The thermal protection layer may comprise a single component of, or a combination of, graphene, zinc borate, antimony trioxide, and a graphene-based compound to protect the opposite sides of the thermal protection layer from potential fire-induced effects.

Mechanical and thermal requirements refer to requirements on the composition of the material having properties meeting a certain standard or threshold to be suitable for use in space or above the Earth's atmosphere, for example, above the orbits, i.e. Low Earth Orbit (LEO), Medium Earth Orbit (MEO), Geostationary Erath Orbit (GEO), and also including cis-lunar and beyond, the deep space. These properties exhibited by the layers of the composite material are the result of a composition or part composition of radiation-resistant materials combined to form a radiation-resistant composite material. These properties include but are not limited to structural properties, strength or hardness properties; shielding properties for high energetic charged particle(s); shielding properties for electromagnetic radiation including X-rays and gamma rays; shielding properties for fast neutrons; shielding properties for slow and thermal neutrons; micrometeoroid protection on outer layer; atomic oxygen resistant coating on outer surface; low density; do not release toxic gases; do not have a relatively low melting point; low flammability (which is dependent on materials specific heat, thermal conductivity, decomposition and ignition temperatures, and the heat produced (heat of combustion) as the material burns); withstand vibrations; keep functionality and geometry even when exposed to large temperature changes; and thermal conductivity and heat insulation properties. These properties may be used or for choosing the composition when providing or manufacturing the composite material. Accordingly, a multi-functional structure for radiation shielding, as an option, can also be used as a structural material with optimized properties in terms of protecting against physical, thermal, radiation damage when the object is situated or traveling in space, or used for habitat construction on a Moon, on an asteroid or on a planet.

In addition to serving structural purposes, the composite material herein described is purposed to provide shielding against galactic cosmic radiation, particles trapped in radiation belts, as well as against solar energetic particles and electromagnetic radiation. The radiation, for example, may include X-rays and gamma rays. The radiation protection or shielding may include against fast, slow, and thermal secondary neutrons. The shielding may extend to protection again atomic oxygen when used at or above low Earth orbits (LEO).

Structurally, the composite material protects provides ballistic protection (e.g., against micrometeoroids, debris, and other objects in space). That is, the composite material is used to shield radiation exposure received by a spacecraft and/or as part of construction material for a spacecraft, a spacesuit, a space habitat. In addition, the composite material may be used as construction materials for shielding of a spacecraft, construction materials of a habitat, a spacesuit, or used in addition to construction materials for radiation shielding of a habitat, shielding of a satellite or any high altitude space vehicle.

The composite material may be produced or manufactured in various ways, including but are not limited to 3D printing or the use of 3D printing technology and traditional molding technology or methods. Further details on the production or methodology are described herein.

Figure 1 is an example composition of the different layers of the composite multifunctional materials, wherein the material as composite material is used as a construction material for a spacecraft habitat.

The multifunctional-layered structure provides shielding, for example, cosmic and solar radiation shielding, shielding against fast, slow, and thermal secondary neutrons, while also serving structural purposes, ballistic protection (micrometeoroids, debris, etc.), and protection against atomic oxygen when used at or such as above low Earth orbits (LEO).

The composite material exemplified in the figure may be manufactured with a number of layers with different thicknesses and compositions. The number of layers and the order of the layers depends on the application of the material (e.g., if only inside a spacecraft, as a construction material for a spacecraft, a spacesuit or as a construction material for a space habitat, etc.).

A first layer may comprise a smart boron-10 (¹⁰B) or lithium-6 (⁶Li) doped carbon fiber reinforced ultra-high molecular weight (UHMW) polyethylene, or high density polyethylene (HDPE) composite to secure both the radiation shielding and structural requirements, and second layer comprises a UHMW polyethylene or high density polyethylene (HDPE) composite to secure optimal radiation shielding properties. The radiation shielding effectiveness for high energetic charged particle radiation is due to the high hydrogen content in smart polyethylene (PE) fibers. The composite or a SmartPE layer will have optimized fiber sizes to also act as efficient heat insulators without compromising the ionizing radiation shielding properties of the material.

The composite material may further comprise a third layer for micrometeoroid and thermal protection, as well as additional radiation shielding. This layer can, for example, comprise boron carbide (B4C) (optionally enriched with ¹⁰B). Alternatively, silicon carbide (SiC) or aluminium carbide (Al₄C₃) coating can be used as micrometeoroid and thermal protection.

The PE fibers in the first and second layers can slow down, or thermalize, fast neutrons because of their large collision or scattering cross sections. The slow and thermal neutrons can then be absorbed by the boron-10 (with high absorption cross section for slow and thermal neutrons) mixed in one SmartPE layer and by the natural boron (or boron-10 enriched) boron carbide (B₄C), which is act as a micrometeoroid and thermal protection (the abundance of boron-10 in natural boron is 19.9 atom percent). Alternatively, silicon carbide (SiC) or aluminium carbide Al₄C₃ coating can be used as micrometeoroid and thermal protection.

A very thin layer of silicon dioxide glass can protect the outer most layer from atomic oxygen present at low Earth orbits (LEO).

The polyethylene fibers may have, for example, the highest specific tensile strength or strength per unit weight, of any reinforcing fiber and a specific modulus that is approximately equivalent to graphite and boron fibers.

On the surface of the layer facing the inside of a spacecraft, a thin protective barrier provides excellent chemical, thermal, and mechanical resistance. For example, a thin flexible graphite sheet/layer can act as a chemical, thermal, and mechanical protective barrier against the interior of a spacecraft.

The bulk material can be 3D printed in any required shape. After that, the surface coatings can be added by e.g. physical vapor deposition (PVD) or chemical vapor deposition (CVD) technique, followed by e.g. molding the layers together under increased temperature and pressure.

No multifunctional-layered composite cosmic and solar radiation shielding structure currently exists that also has structural attributes; provides shielding against fast, slow and thermal neutrons; and acts as a fire barrier, heat protection, ballistic protection, and protection against atomic oxygen. The heat protection is especially applicable when a spacecraft re-enters Earth's atmosphere, where strong sunlight and extreme heat, and due to friction between the air and the spacecraft, which converts the kinetic energy of the spacecraft to heat energy, are exhibited during the process.

The proposed structure requires knowledge in material science, radiation physics, radiation protection, as well as an understanding of ion reactions and transport in different materials.

The material can be used as construction material for spacecraft, used in addition to the construction material for shielding of a spacecraft, construction material of a habitat, or used in addition to construction material for radiation shielding of a habitat, shielding of a satellite or any high altitude space vehicle, etc.

**Requirements of the material:** 1. Good structural properties; 2. Good strength properties; 3. Good shielding properties for high energetic charged particle(s); 4. Good shielding properties for fast neutrons; 5. Good shielding properties for slow and thermal neutrons; 6. Good shielding properties for X-rays and photons, 7. Good micrometeoroid protection on outer layer; 8. Atomic oxygen resistant coating on outer surface; 9. As low density as possible; 10. Do not release toxic gases; 11. Do not have too low a melting point; 12. As low flammability (which is dependent on materials specific heat, thermal conductivity, decomposition and ignition temperatures, and the heat produced (heat of combustion) as the material burns); 13. Withstand vibrations; 14. Keep functionality and geometry even when exposed to large temperature changes, which includes good thermal conductivity and heat insulation properties.

The figure shows an example of layers 1 to 5 of the composite material are shown. It is understood that there may be more or fewer layers provided that the layers include at least one shielding layer. The layers of the composite material could be gradients, coatings, or sublayers of a single or plurality of layers. The layers are gradually merged into each other, forming a single layered structure. The layers 1 to 5 of the example are detailed as.

Layer 1. Fire barrier (a thermal protection/fire resistant Layer): A flexible graphite sheet/layer with a weight of about 20 to 300 g/m2. The elastic graphite sheet/layer provides excellent chemical, thermal, and mechanical resistance and therefore act as a protective barrier against the interior of a spacecraft.

Layer 2. Structural and radiation shielding against High atomic number and energy (HZE) particles and fast, slow and thermal neutrons (a shielding layer): This layer is a 3D printed natural boron or smart boron-10 (10B) doped carbon fiber reinforced ultra-high molecular weight (UHMW) polyethylene composite comprising 30 to 95 percent by volume of fibers, 5 to 20 percent by volume of 10B. A remaining percent by volume can be filled with an epoxy resin matrix to fill the space between the fibers. The composite (i.e. a SmartPE layer) may comprise layers of interwoven carbon and PE fibers laid in the 0° warp and 45° to 90° fill direction. The fiber/pore size can be optimized to get maximum material strength and thermoregulation over the material to minimize structural and morphological changes during large temperature variations.

Layer 2 may further comprise natural boron and natural lithium-6. In addition to UHMW, the layer can be reinforced by high density polyethylene (HDPE). HDPE may be a suitable replacement for UHMW or applied in addition to or in combination with UHMW. HDPE may be used in other layers where thermoplastic polymers are applicable.

Layer 3. Radiation shielding against HZE particles and fast neutrons (a shielding layer): This layer is a 3D printed ultra-high molecular weight (UHMW) polyethylene composite comprising 65 to 80 percent by volume of ultra-high molecular weight (UHMW) polyethylene fibers. The SmartPE comprises layers of fibers laid in the 0° warp and 45° to 90° fill direction. The fiber/pore size can be optimized to get maximum material strength, and thermoregulation over the material to minimize structural and morphological changes during large temperature variations. Between layers 2 and 3, one or more metal containing layers may be added to protect against electrons, X-rays and gamma radiation, as shown in figures 2 and 3.

Layer 4. Micrometeoroid and thermal protection, as well as radiation shielding (a structural layer): This layer can comprise, for example, boron carbide, silicon carbide, aluminium carbide, or a combination thereof. Boron carbide coating (B₄C, best choice considering hardness, Young's modulus, compressive strength, density, as well as it acts as shielding against thermal neutrons, shown in Table 2 below), silicon carbide coating (second best choice), or aluminium carbide coating (last choice). Boron carbide can be made of natural boron or boron-10 enriched boron carbide, which is better for shielding against thermal neutrons than natural boron.

**Table 2: Comparison between ballistic protective materials made of ceramic and steel.**

| **Property Steel** | **Steel** | **Aluminium oxide** | **Silicon carbide** | **Boron carbide** |
|---|---|---|---|---|
| **Hardness** | 100% | 250% | 300% | 300% |
| **Young's Modulus** | 100% | 166% | 192% | 200% |
| **Compressive Strength** | 100% | 166% | 208% | 266% |
| **Density (weight)** | 100% | 50% | 40% | 35% |

Thermal testing has shown that on exposing the B₄C layer to temperatures 1,200°C and above, the maximum temperature recorded at the bottom of the 12.7 cm thick carbon foam sample does not exceed 40°C. This thermal capability is comparable to that of the high temperature ceramic tiles that are were used on the space shuttle.

Natural abundance of boron-10 is 19.9 atom percent, so the layer will also act as an absorber of thermal neutrons. If boron-10 enriched B₄C, the absorption of thermal neutrons is significantly increased compared to if natural boron is used.

A combination of open-cell carbon foam and plasma deposited B₄C coating on the exterior surface of the carbon foam can be used. A coal-based carbon foam has low density (0.268 g/cm³), low thermal conductivity (0.25 to 5 W/mK depending on the cell structure), and the ability to withstand temperatures up to 3,000°C in a nonoxidizing atmosphere or with suitable surface protection. Thermal conductivity of the carbon foam is comparable to that of the HRSI tiles used on the space shuttle. B₄C can be deposited on the surface of the carbon foam via vacuum plasma spraying (VPS).

Layer 5. Atomic oxygen resistant coating (a structural/atomic oxygen resistance layer): To protect the other layers of space structure at or above low Earth orbit (LEO) from atomic oxygen, the composite materials further comprise an atomic oxygen resistant coating. The layer of boron carbide (alt. Silicon carbide or aluminium carbide) will be coated with a very thin layer of Silicon dioxide glass, which has already been oxidized so it cannot be damaged by atomic oxygen. When making the layer very thin, it is flexible, and it does not sacrifice any thermal properties. Alternative coatings are graphite coating using e.g. or dipping the material into a graphite oxide solution. As part of or in addition to layer 5, further coating or gradient may be imposed to protect again particles trapped in radiation belts debris, micrometeoroids, illustrated in figures 2 and 3.

Figure 2 is another example of the different layers 200 of the composite materials for shielding means. The figure shows the composite multifunctional material or composite material including at least one shielding layer 206, 208 for minimizing effects damage from traveling or residing in space, above the Earth's orbits. When disposed on each other, the layers of the composite material may gradually merge into each other layer forming a single structure or block of composite material.

The comprise material shown in figure 2 comprises a first shielding layer 210, at least one metal containing layer 208 over the first shielding layer 210, and a second shielding layer 206 over said at least one metal containing layer 208 opposite of the first shielding layer 210. The metal containing layer or layers 208 are sandwiched between the two shielding layers 206, 210. The two shielding layers 206, 210 each and/or in combination with other layers of the composite material provide the composite material with radiation shielding characteristics. More specifically, the layers include radiation-resistant composite materials meeting a set of mechanical and thermal requirements. These characteristics include shielding against not only HZE particles but also fast neutrons and slow thermal neutrons by incorporating Boron-based and lithium-based compounds with thermoplastic polymers. The shielding layers 206, 210 thereby effectively retards secondary produced neutrons and absorbs slow and thermal neutrons. Examples of the shielding layers 206, 210 comprising thermoplastic polymers doped with one or more chemical compounds for shielding are provided elsewhere in the disclosure.

As an option, the composite material may conclude one or more structural layers 202, 204 over the second shielding layer opposite of said at least one metal containing layer. Each of the structural layers comprises multifunctional composite materials that are prone to or comprise be oxidation-resistant material, heating resistant material, and polymer-based material-the multifunctional composite materials for shielding purposes in addition to radiation shielding.

As another option, the structural layer(s) 202, 204 may further include at least one atomic oxygen resistance layer 202 over at least one micrometeoroid layer 204, wherein at least one micrometeoroid layer 204 is disposed on the second shielding layer 206 opposite of said at least one metal containing layer 208. As another option, at least one thermal protection layer 212 disposed under the first shielding layer 210 opposite of said at least one metal containing layer 208.

In addition, the structural layers(s) 202, 204 may comprise a heat protection layer. As an option, the heat protection layer may be disposed on the atomic oxygen resistance layer. As another option, the heat protection layer may be integrated onto the atomic oxygen resistance layer 202 over at least one micrometeoroid layer 204.

The chemical compounds used for shielding in the shielding layers 206, 210 comprise at least boron (B) and/or lithium (Li). For example, the composition may comprise a boron-based or lithium-based compound that includes but are not limited to the categories of boron and lithium compounds described herein. The boron-based and lithium-based compounds may be either naturally occurring elements or other, for example, boron-10 enriched B₄C. The natural abundance of boron-10 is 19.9 atom percent such that the shielding layers 206, 210 with boron-10 acts as an absorber of backscattered thermal neutrons. Such absorption is significantly increased when natural boron is replaced with boron-10 enriched B₄C.

The metal containing layer(s) 208 is sandwiched between the two shielding layers 206, 210 as shown in the figure. Each metal containing layer 208 may comprise elemental metal/metal oxide with an atomic number (Z), as an option, from 22 to 30 and/or 72 to 79. As another option, atomic number (Z) is 13 for at least two metal/metal oxide layers. As another option, atomic number (Z) is from 72 to 79, wherein said at least one metal containing layer 208 is positioned between at least two other metal containing layers 208 of lower atomic number (Z). Each layer may be the thickness, for example, of 1 to 30 mm such that when one or more metal containing layers 208 are introduced, the thickness is at least 1 mm. The thickness is adapted where or for what function the composite material is being used, whether it is on a spacecraft or in a spacesuit.

Figure 3 is another example of the different layers 300 of the composite multifunctional materials for shielding means. The figure shows the composite shielding material as a plurality of layers. The material includes one or more of the multifunctional layers, with each layer stacked on top of one another or as gradients merging into each other, forming the composite shielding material with optimized thermal properties. The plurality of multifunctional layers includes at least two shielding layers 304, with each shielding layer 304 disposed between at least two other multifunctional layers selected from a structural layer 302, metal containing layer 306, micrometeoroid layer, and thermal protection layer as well as a different structural layer 302. The multifunctional layers correspond to the layers shown in figures 1 and 2.

The multifunctional layer may further encompass structural and shielding layer in addition to the structural layer 302 or in place of the structural layer 302, for example, a fire barrier, a layer for structural and radiation shielding against HZE particles and fast, slow and thermal neutrons, a layer of radiation shielding against HZE particles and fast neutrons, layers of radiation shielding against X-rays and photons, a layer for micrometeoroid and thermal protection, where the layer may comprise radiation shielding properties with doped radiation absorbing compounds, and atomic oxygen resistant coating/layer.

An example of a fire barrier or thermal protection layer may comprise a flexible graphite sheet/layer weighing about 20 to 300 g/m2. The elastic graphite sheet/layer provides excellent chemical, thermal, and mechanical resistance and therefore act as a protective barrier against the interior of a spacecraft.

An example of a shielding layer may be a 3D printed smart boron-10 (¹⁰B) doped carbon fiber reinforced ultra-high molecular weight (UHMW) polyethylene, or high density polyethylene, the composite comprising 30 to 95 percent by volume of fibers, 5 to 20 percent by volume of natural boron or ¹⁰B. A remaining percent by volume can be filled with an epoxy resin matrix to fill the space between the fibers. The SmartPE comprises layers of interwoven carbon and PE fibers laid in the 0° warp and 45° to 90° fill direction. The fiber/pore size can be optimized to get maximum material strength and thermoregulation over the material to minimize structural and morphological changes during significant temperature variations. The shielding layer may comprise characteristics and material for physical shielding against objects in space.

Another example of a shielding layer may be an ultra-high molecular weight (UHMW) polyethylene, or high density polyethylene, the composite comprising 65 to 95 percent by volume of ultra-high molecular weight (UHMW) polyethylene fibers. The SmartPE comprises layers of fibers laid in the 0° warp and 45° to 90° fill direction. The fiber/pore size can be optimized to get maximum material strength and thermoregulation over the material to minimize structural and morphological changes during significant temperature variations. Between layers 2 and 3 in relation to figure 1, one or more metal containing layers 306 may be added to protect against electrons, X-rays and gamma radiation.

An example of a structure layer (also serving as radiation shielding, specifically for neurons) may comprise, for example, boron carbide, silicon carbide, aluminium carbide, or a combination thereof. Shown in Table 2 are boron carbide coating (B₄C), best choice considering hardness, Young's modulus, compressive strength, density, as well as it acts as shielding against thermal neutrons, silicon carbide coating (as another choice), or aluminium carbide coating (as yet another choice). Boron carbide can be made of natural boron or boron-10 enriched boron carbide, which is better for shielding against thermal neutrons than natural boron.

In the case of B₄C as the doping agent for the composite material layers, the thermal testing has shown that on exposing the B₄C layer to temperatures 1,200°C and above, the maximum temperature recorded at the bottom of the 12.7 cm thick carbon foam sample does not exceed 40°C. This thermal capability is comparable to that of the high-temperature ceramic tiles used on the space shuttle.

An example may be using a combination of open-cell carbon foam and plasma deposited B₄C coating on the exterior surface of the carbon foam. Coal-based carbon foam has low density (0.268 g/cm³), low thermal conductivity (0.25 to 5 W/mK depending on the cell structure), and the ability to withstand temperatures up to 3,000°C in a nonoxidizing atmosphere or with suitable surface protection. The thermal conductivity of the carbon foam is comparable to that of the HRSI tiles used on the space shuttle. B₄C can be deposited on the surface of the carbon foam via vacuum plasma spraying (VPS).

An example of yet another structural layer 302 may be an atomic oxygen resistant coating for protecting the other layers of space structure at or above low Earth orbit (LEO) from atomic oxygen. The composite materials may further comprise this atomic oxygen resistant coating. For the coating, the layer of boron carbide (alt. Silicon carbide or aluminium carbide) will be coated with a very thin layer of Silicon dioxide glass, which has already been oxidized, so it cannot be damaged by atomic oxygen. When making the layer very thin, it is flexible and does not sacrifice any thermal properties. Alternative coatings are graphite coating using e.g. or dipping the material into a graphite oxide solution. As part of or in addition to layer 5, further coating or gradient may be imposed to protect again particles trapped in radiation belts, debris, micrometeoroids.

Figure 4 is an example method 400 of providing the composite materials for shielding means. In providing the composite material, in step 402, a model of the composite material is generated in a virtual environment, wherein the model comprises a digital representation of a composite material comprising: a first shielding layer, at least one metal containing layer over the first shielding layer, and a second shielding layer over said at least one metal containing layer. The generation of the model is optional. Even when no model is generated by the method, a suitable device may be used to produce or enable the production of the layers of the composite material using a model provided externally or using a model embedded in the device.

The production of the composite material begins with step 402, of providing the composition of materials to the device. The device may be a 3D printer or a molding apparatus suitable for receiving and processing the composition of materials. The composite material is generated in step 406 based on a model using the materials. The composite material uses the materials to generate the composite material. Specifically, the materials are combined to form layers of the composite material. The method for combining the material to form the layer may be done using various techniques such that the layers are merged into each other gradually. Optionally, imperfections or defects on the composite material is removed 406 in accordance with the model based on one or more inputs.

Further, the composite material may be generated, for example, by merging the composition in 0° warp and 45° to 90° fill direction to produce at least one layer of the composite material, wherein the composition comprises carbon fibres and thermoplastic polymers. As another option, the composition comprises thermoplastic polymers that are cross-linked prior or after to generating the composite material.

More specifically, the layers of the doped multifunctional composite material may be 3D printed or molded together, where one or more models of the composite material may be generated prior to printing or molding using appropriate computing or system tools such as using computer-aided design software. During the 3D printing or molding process, in one example, an epoxy resin matrix can be used to fill the space between the thermoplastic polymers, more specifically the UHMWPE or HDPE or a mixture of different PE fibers, and the material can have interwoven carbon and PE fibers laid or 3D printed in the 0° warp and 45° to 90° fill direction. The composite material is 50 to100 percent by volume UHMWPE or HDPE or a mixture of PE fibers and the remaining percent by volume an epoxy resin matrix and dopants, with graphite fibers. The same can be done without epoxy resin and graphite fibers.

The fiber/pore size and orientations may be optimized to get maximum material strength and thermoregulation over the material to minimize structural and morphological changes during mechanical stress and temperature variations.

The production of the composite material, for example, is performed by using an extrusion process, in which all components (dopants and raw plastic) is melted and formed into a continuous profile. The extrusion process starts by feeding plastic material (pellets, granules, flakes or powders) from a hopper into the barrel of the extruder. The material is gradually melted by the mechanical energy generated by turning screws and by heaters arranged along the barrel. The molten polymer is then forced into a die, which shapes the polymer into a filament that hardens during cooling. The filament is transferred to a 3D printer, which prints the required form factor. Molding techniques can be used as an alternative or in addition to 3D printing.

The mechanical strength and melting temperature of the composite material during production may be increased by cross-linking the thermoplastic polymers or polyethylene with ionizing or UV radiation. Additional catalysts (i.e. acidic catalysts) for accelerating the reaction may be applied in the process.

The production of the composite material is not limited to only the method and techniques described herein. Further techniques for doping the plastic may be applicable in order to produce the composite material under various conditions for providing various benefits and advantages associated with the composite material.

In one aspect is a composite material comprising: a first shielding layer; at least one metal containing layer over the first shielding layer; and a second shielding layer over said at least one metal containing layer opposite of the first shielding layer; wherein the first shielding layer and the second shielding layer each and/or in combination with other layers of the composite material provide the composite material with radiation shielding characteristics.

In one aspect is a composite material comprising: a first shielding layer; at least one metal/metal oxide layer over the first shielding layer; and a second shielding layer over said at least one metal/metal oxide layer opposite of the first shielding layer; wherein the first shielding layer and the second shielding layer each and/or in combination with other layers of the composite material provide the composite material with radiation shielding characteristics.

In another aspect is a plurality of multifunctional layers with each layer stacked on top of one another or as gradients merging into each other layer forming the composite shielding material with optimized thermal properties; wherein the plurality of multifunctional layers comprise at least two shielding layers with each shielding layer disposed between at least two other multifunctional layers selected from a structural layer, metal/metal oxide layer, micrometeoroid layer, and thermal protection layer.

In another aspect is a method for providing the composite material, comprising: generating a model of the composite material in a virtual environment, wherein the model comprises a digital representation of a composite material comprising: a first shielding layer, at least one metal/metal oxide layer over the first shielding layer, and a second shielding layer over said at least one metal/metal oxide layer; providing a composition of the composite material to a device; generating the composite material based on the model using the composition, wherein the composition is combined to form layers of the composite material; and removing imperfections or defects on the composite material in accordance with the model based on one or more inputs.

In another aspect is composite material comprising: a first layer a second layer disposed on the first layer; and a third layer disposed on the second layer opposite the first layer, such that the second layer is disposed between the first layer and the third layer; wherein the first layer comprises a structural and radiation shielding layer; wherein the second layer comprises a radiation shielding layer; and wherein the third layer comprises a micrometeoroid and thermal protection layer.

As an option, wherein the first layer comprises a BC₄ or BN or boron-10 (10B), carbon fibers, polyethylene, and an epoxy.

As an option, wherein the first layer comprises BC₄ or BN or a 10B doped, carbon fiber reinforced, ultrahigh molecular weight (UHMW) polyethylene composite comprising 30-95 percent by volume fibers, 5-20 percent by volume BC₄ or BN or 10B, and the remaining percent by volume comprising the epoxy, wherein the epoxy comprises a resin matrix that fills the space between the fibers.

As an option, wherein the carbon fibers and UHMW polyethylene fibers are interwoven in the first layer. As an option, wherein the carbon fibers and UHMW polyethylene fibers are laid in the 0° warp and 45°-90° fill direction.

As an option, wherein the second layer comprises polyethylene.

As an option, wherein the second layer comprises polyethylene and an epoxy.

As an option, wherein the second layer comprises an ultrahigh molecular weight (UHMW) polyethylene composite comprising 65-95 percent by volume of UHMW polyethylene fibers.

As an option, wherein the second layer comprises an ultrahigh molecular weight (UHMW) polyethylene composite comprising 65-95 percent by volume of UHMW polyethylene fibers and the remaining percent by volume comprising the epoxy, wherein the epoxy comprises a resin matrix that fills the space between the fibers.

As an option, wherein the second layer comprises a plurality of layers of UHMW polyethylene fibers.

As an option, wherein the UHMW polyethylene fibers are laid in the 0° warp and 45°-90° fill direction.

As an option, wherein the third layer comprises boron carbide, silicon carbide, aluminum carbide, or a combination thereof.

As an option, the third layer comprises boron carbide.

As an option, wherein the third layer comprises BC₄ or BN or a 10B enriched boron compound.

As an option, further comprising a fire barrier layer disposed on the first layer opposite the second layer, such that the first layer is disposed between the fire barrier layer and the second layer. As an option, wherein the fire barrier layer comprises a flexible graphite layer. As an option, wherein the fire barrier layer has a density or weight of 20 to 300 g/m².

As an option, further comprising an atomic oxygen resistant coating disposed on the third layer opposite the second layer, such that third layer is disposed between the second layer and the atomic oxygen coating. As an option, wherein the atomic oxygen resistant coating comprises silicon dioxide, graphite, or a combination thereof. As an option, wherein the atomic oxygen resistant coating comprises silicon dioxide glass. As an option, wherein the atomic oxygen resistant coating comprises graphite oxide.

As an option, wherein the composite material provides cosmic and solar radiation shielding; provides shielding against fast, slow, and thermal secondary neutrons; serves structural purposes; provides ballistic protection (e.g., against micrometeoroids, debris, etc.); provides protection against atomic oxygen when used at or above low Earth orbits (LEO); or a combination thereof.

As an option, wherein the composite material provides cosmic and solar radiation shielding; provides shielding against fast, slow, and thermal secondary neutrons; serves structural purposes; provides ballistic protection (e.g., against micrometeoroids, debris, etc.); and provides protection against atomic oxygen when used at or above low Earth orbits (LEO).

As an option, the method comprising using the material inside a spacecraft, as a construction material for a spacecraft, in a spacesuit, as a construction material for a space habitat, or a combination thereof.

As an option, the method comprising using the composite material as a construction material for shielding of a spacecraft, construction material of a habitat, or used in addition to a construction material for radiation shielding of a habitat, shielding of a satellite or any high altitude space vehicle.

As an option, further comprising: one or more structural layers over the second shielding layer opposite of said at least one metal/metal oxide layer, wherein each structural layer comprises multifunctional composite materials.

As an option, wherein said one or more structural layers comprise at least one atomic oxygen resistance layer over at least one micrometeoroid layer, wherein the at least one micrometeoroid layer is disposed on the second shielding layer opposite of said at least one metal/metal oxide layer.

As an option, wherein the multifunctional composite materials comprise oxidation-resistant material, heating resistant material, and polymer-based material.

As an option, further comprising: at least one thermal protection layer disposed under the first shielding layer opposite of said at least one metal/metal oxide layer.

As an option, wherein the first and the second shielding layers comprise radiation-resistant composite materials meeting a set of mechanical and thermal requirements.

As an option, wherein the first shielding layer comprises thermoplastic polymers, wherein the thermoplastic polymers are doped with one or more chemical compounds.

As an option, wherein one or more chemical compounds comprise at least Boron (B) and/or Lithium (Li).

As an option, wherein said one or more metal/metal oxide layers comprises an atomic number (Z), wherein (Z) is from 22 and 30 and/or 72 and 79. As an option, wherein the atomic number (Z) is 13 for at least two metal/metal oxide layers. As an option, wherein said one or more metal/metal oxide layers comprise at least one metal/metal oxide layer with the atomic number (Z) is from 72 to 79, wherein said at least one metal/metal oxide layer is positioned between at least two other metal/metal oxide layers of lower atomic number (Z).

As an option, wherein each metal/metal oxide layer has a thickness from 1mm to 30 mm.

As an option, wherein each layer is adapted to merge into each other layer forming the composite material as a single structure.

As an option, wherein said generating the composite material based on the model using the composition further comprising: merging the composition in 0° warp and 45° - 90° fill direction to produce at least one layer of the composite material, wherein the composition comprises carbon fibres and thermoplastic polymers.

As an option, wherein the composition comprises thermoplastic polymers that are cross-linked prior or after to generating the composite material according any of the aspects described herein.

As an option wherein the generated model further comprises composite material or composite shielding material according any of the aspects described herein.

As an option, wherein the composite material provides shielding against galactic cosmic radiation, particles trapped in radiation belts as well as against solar energetic particles and electromagnetic radiation, including X-rays and gamma rays; provides shielding against fast, slow, and thermal secondary neutrons; serves structural purposes; provides ballistic protection (e.g., against micrometeoroids, debris, etc.); provides protection against atomic oxygen when used at or above low Earth orbits (LEO); provide heat and thermal protection; provide resistance to fire or fire induce effects; or a combination thereof.

As an option, wherein the composite material provides shielding electromagnetic radiation; serves structural purposes; provides ballistic protection (e.g., against micrometeoroids, debris, etc.); provides protection against atomic oxygen when used at or above low Earth orbits (LEO); provides protection against thermal effects; or a combination thereof.

As an option, wherein the composite material provides cosmic and solar radiation shielding; provides shielding against fast, slow, and thermal secondary neutrons; provides shielding against X-rays and gamma rays; serves structural purposes; provides ballistic protection (e.g., against micrometeoroids, debris, etc.); and provides protection against atomic oxygen when used at or above low Earth orbits (LEO).

As an option, using the composite material to shield radiation exposure received by a spacecraft, and/or as part of construction material for a spacecraft, a spacesuit, a space habitat, or a combination thereof.

As an option, using the composite material as construction materials for shielding of a spacecraft, construction materials of a habitat, a spacesuit, or used in addition to construction materials for radiation shielding of a habitat, shielding of a satellite or any high altitude space vehicle.

It will be understood that the benefits and advantages described above may relate to one embodiment or may relate to several embodiments. The embodiments are not limited to those that solve any or all of the stated problems or those that have any or all of the stated benefits and advantages. Variants should be considered to be included in the scope of the invention.

Any reference to 'an' item refers to one or more of those items. The term 'comprising' is used herein to mean including the method steps or elements identified, but that such steps or elements do not comprise an exclusive list and a method or apparatus may contain additional steps or elements.

As used herein, the term "exemplary", "example" or "embodiment" is intended to mean "serving as an illustration or example of something". Further, to the extent that the term "includes" is used in either the detailed description or the claims, such term is intended to be inclusive in a manner similar to the term "comprising" as "comprising" is interpreted when employed as a transitional word in a claim.

The figures illustrate exemplary methods. While the methods are shown and described as being a series of acts that are performed in a particular sequence, it is to be understood and appreciated that the methods are not limited by the order of the sequence. For example, some acts can occur in a different order than what is described herein. In addition, an act can occur concurrently with another act. Further, in some instances, not all acts may be required to implement a method described herein.

The order of the steps of the methods described herein is exemplary, but the steps may be carried out in any suitable order, or simultaneously where appropriate. Additionally, steps may be added or substituted in, or individual steps may be deleted from any of the methods without departing from the scope of the subject matter described herein. Aspects of any of the examples described above may be combined with aspects of any of the other examples described to form further examples without losing the effect sought.

It will be understood that the above description of a preferred embodiment is given by way of example only and that various modifications may be made by those skilled in the art.

What has been described above includes examples of one or more embodiments. It is, of course, not possible to describe every conceivable modification and alteration of the above devices or methods for purposes of describing the aforementioned aspects, but one of ordinary skill in the art can recognize that many further modifications and permutations of various aspects are possible. Accordingly, the described aspects are intended to embrace all such alterations, modifications, and variations that fall within the scope of the appended claims.

### ANNEX

1. A composite material comprising:
   a first shielding layer;
   at least one metal containing layer over the first shielding layer; and
   a second shielding layer over said at least one metal containing layer opposite of the first shielding layer;
   wherein the first shielding layer and the second shielding layer each and/or in combination with other layers of the composite material provide the composite material with radiation shielding characteristics.
2. The composite material of statement 1, further comprising:
   one or more structural layers over the second shielding layer opposite of said at least one metal containing layer, wherein each structural layer comprises multifunctional composite materials.
3. The composite material of statement 2, wherein said one or more structural layers comprise at least one atomic oxygen resistance layer over at least one micrometeoroid layer, wherein the at least one micrometeoroid layer is disposed on the second shielding layer opposite of said at least one metal containing layer.
4. The composite material of statement 2 or 3, wherein the multifunctional composite materials comprise oxidation-resistant material, heating resistant material, and polymer-based material.
5. The composite material of any preceding statement, further comprising:
   at least one thermal protection layer disposed under the first shielding layer opposite of said at least one metal containing layer.
6. The composite material of any preceding statement, wherein the first and the second shielding layers comprise radiation-resistant composite materials meeting a set of mechanical and thermal requirements.
7. The composite material of any preceding statement, wherein the first shielding layer comprises thermoplastic polymers, wherein the thermoplastic polymers are doped with one or more chemical compounds.
8. The composite material of statement 7, wherein one or more chemical compounds comprise at least Boron (B) and/or Lithium (Li).
9. The composite material of any preceding statement, wherein said one or more metal containing layers comprise metals or metal oxides with atomic number (Z), wherein (Z) is from 22 to 30 and/or 72 to 79.
10. The composite material of statement 9, wherein the atomic number (Z) is 13 for metals or metal oxides of at least two metal containing layers.
11. The composite material of statement 9 or 10, wherein said one or more metal containing layers comprise at least one metal or metal oxide with the atomic number (Z) is from 72 to 79, wherein said at least one metal containing layer is positioned between at least two other metal containing layers of lower atomic number (Z).
12. The composite material of statement 9 to 11, wherein each metal containing layer has a thickness from 1mm to 30 mm.
13. The composite material of any preceding statement, wherein each layer is adapted to merge into each other layer forming the composite material as a single structure.
14. A composite shielding material comprising:
   a plurality of multifunctional layers with each layer stacked on top of one another or as gradients merging into each other layer forming the composite shielding material with optimized thermal properties;
   wherein the plurality of multifunctional layers comprise at least two shielding layers with each shielding layer disposed between at least two other multifunctional layers selected from a structural layer, metal containing layer, micrometeoroid layer, and thermal protection layer.
15. A composite shielding material, wherein the composite shielding material comprises the composite material according to any one of statements 1 to 13.
16. A method for providing the composite material, comprising:
   generating a model of the composite material in a virtual environment, wherein the model comprises a digital representation of a composite material comprising: a first shielding layer, at least one metal containing layer over the first shielding layer, and a second shielding layer over said at least one metal containing layer;
   providing a composition of the composite material to a device;
   generating the composite material based on the model using the composition, wherein the composition is combined to form layers of the composite material; and
   removing imperfections or defects on the composite material in accordance with the model based on one or more inputs.
17. The method of statement 16, wherein said generating the composite material based on the model using the composition further comprising: merging the composition in 0° warp and 45° - 90° fill direction to produce at least one layer of the composite material, wherein the composition comprises carbon fibres and thermoplastic polymers.
18. The method of statement 16 or 17, wherein the composition comprises thermoplastic polymers that are cross-linked prior or after to generating the composite material according to any one of statements 1-14.
19. The method of statements 16 to 18, wherein the generated model further comprises composite material or composite shielding material according to any one of statements 1 to 14.
20. The composite material of any one of statements 1-14, wherein the composite material provides shielding against galactic cosmic radiation, particles trapped in radiation belts as well as against solar energetic particles and electromagnetic radiation, including X-rays and gamma rays; provides shielding against fast, slow, and thermal secondary neutrons; serves structural purposes; provides ballistic protection (e.g., against micrometeoroids, debris, etc.); provides protection against atomic oxygen when used at or above low Earth orbits (LEO); provide heat and thermal protection; provide resistance to fire or fire induce effects; or a combination thereof.
21. The composite material of any one of statements 1-14, wherein the composite material provides shielding against electromagnetic radiation; serves structural purposes; provides ballistic protection (e.g., against micrometeoroids, debris, etc.); provides protection against atomic oxygen when used at or above low Earth orbits (LEO); provides protection against thermal effects; or a combination thereof.
22. The composite material of any one of statements 1-14, wherein the composite material provides cosmic and solar radiation shielding; provides shielding against fast, slow, and thermal secondary neutrons; provides shielding against X-rays and photons; serves structural purposes; provides ballistic protection (e.g., against micrometeoroids, debris, etc.); and provides protection against atomic oxygen when used at or above low Earth orbits (LEO).
23. A method of using the composite material of any one of statements 1-14, the method comprising: using the composite material to shield radiation exposure received by a spacecraft, and/or as part of construction material for a spacecraft, a spacesuit, a space habitat, or a combination thereof.
24. A method of use of the composite material of any one of statements 1-14, the method comprising: using the composite material as construction materials for shielding of a spacecraft, construction materials of a habitat, a spacesuit, or used in addition to construction materials for radiation shielding of a habitat, shielding of a satellite or any high altitude space vehicle.

## Claims

1. A composite shielding material comprising:
a plurality of multifunctional layers (300) with each layer stacked on top of one another or as gradients merging into each other layer forming the composite shielding material with optimized thermal properties;
wherein the plurality of multifunctional layers comprises at least two shielding layers (304) with each shielding layer disposed between at least two other multifunctional layers selected from a structural layer (302), metal containing layer (306), micrometeoroid layer, and thermal protection layer.

2. The composite shielding material of claim 1 comprising a structural layer (302), wherein one or more of the multifunctional layers further comprise a structural and shielding layer in addition to the structural layer (302).

3. The composite shielding material of claim 2, wherein the structural and shielding layer is one of:
a fire barrier;
a layer for structural and radiation shielding against high atomic number and energy "HZE" particles and fast, slow and thermal neutrons;
a layer of radiation shielding against HZE particles and fast neutrons;
layers of radiation shielding against X-rays and photons;
a layer for micrometeoroid and thermal protection; or
atomic oxygen resistant coating/layer.

4. The composite shielding material of claim 3, wherein the structural and shielding layer is a layer for micrometeoroid and thermal protection, and wherein the structural and shielding layer comprises radiation shielding properties with doped radiation absorbing compounds.

5. The composite shielding material of claim 3, wherein the structural and shielding layer is a fire barrier that comprises a flexible graphite sheet weighing about 20 to 300 g/m².

6. The composite shielding material of any preceding claim comprising a thermal protection layer, wherein the thermal protection layer comprises a flexible graphite sheet weighing about 20 to 300 g/m².

7. The composite shielding material of any preceding claim, wherein one or more of the shielding layers (304) is a 3D printed smart boron-10 "¹⁰B" doped carbon fiber reinforced ultra-high molecular weight "UHMW" polyethylene, or high-density polyethylene.

8. The composite shielding material of claim 7, wherein the UHMW or high-density polyethylene comprises 30 to 95 percent by volume of fibers, 5 to 20 percent by volume of natural boron or ¹⁰B, and a remaining percent by volume of an epoxy resin matrix.

9. The composite shielding material of claim 7, wherein the UHMW or high-density polyethylene comprises 65 to 95 percent by volume of UHMW polyethylene fibers.

10. The composite shielding material of any preceding claim comprising a structural layer (302), wherein the structural layer (302) comprises boron carbide, silicon carbide and/or aluminium carbide.

11. The composite shielding material of claim 10, wherein the boron carbide is made of natural boron or boron-10 "¹⁰B" enriched boron carbide.

12. The composite shielding material of any preceding claim comprising a structural layer (302), wherein the structural layer (302) comprises an atomic oxygen resistant coating for protecting the other layers of a space structure at or above low Earth orbit "LEO" from atomic oxygen.

13. The composite shielding material of claim 12 when dependent on claim 10 or claim 11, wherein the boron carbide, silicon carbide and/or aluminium carbide is coated with a layer of oxidized silicon dioxide glass.

14. A method of using the composite material of any preceding claim, the method comprising using the composite material to shield a spacecraft from radiation exposure, and/or as part of construction material for a spacecraft, a spacesuit, a space habitat, or a combination thereof.

15. A method of use of the composite shielding material of any one of claims 1-13, the method comprising using the composite material as a construction material for shielding of a spacecraft, a construction material of a habitat, a spacesuit, or in addition to a construction material for radiation shielding of a habitat, shielding of a satellite or any high-altitude space vehicle.
